(19) Europäisches Patentamt
European Patent Office
Office européen des brevets

(11) Veröffentlichungsnummer: **0 014 731**
**B1**

# (12) EUROPÄISCHE PATENTSCHRIFT

(45) Veröffentlichungstag der Patentschrift: **01.06.83**

(51) Int. Cl.³: **C 08 K 5/02, C 08 K 5/03**

(21) Anmeldenummer: **79102282.5**

(22) Anmeldetag: **05.07.79**

## (54) Verfahren zur Brandschutzausrüstung von thermoplastischen Kunststoffen.

(30) Priorität: **12.02.79 DE 2905253**

(43) Veröffentlichungstag der Anmeldung:
**03.09.80 Patentblatt 80/18**

(45) Bekanntmachung des Hinweises auf die Patenterteilung:
**01.06.83 Patentblatt 83/22**

(84) Benannte Vertragsstaaten:
**BE CH FR GB NL SE**

(56) Entgegenhaltungen:
**CH - A - 537 991**
**DE - A - 2 045 079**
**FR - A - 2 301 556**
**US - A - 4 067 930**

**CHEMICAL ABSTRACTS, Band 85, Nr. 8, 23. August 1976, Seite 40, Nr. 47614y Columbus, Ohio, U.S.A.**

(73) Patentinhaber: **Chemische Fabrik Kalk GmbH**
**Kalker Hauptstrasse 22 Postfach 91 01 57**
**D-5000 Köln 91 (DE)**

(72) Erfinder: **Neukirchen, Ernst**
**Vorsterstrasse 75**
**D-5000 Köln 91 (DE)**
Erfinder: **Kerscher, Utto, Dr.**
**Am Beissel 25**
**D-5042 Erftstadt (DE)**

(74) Vertreter: **Dressler, Joachim, Dipl.-Chem.**
**Postfach 1368**
**D-3520 Hofgeismar (DE)**

**EP 0 014 731 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

# Verfahren zur Brandschutzausrüstung von thermoplastischen Kunststoffen

Für die Brandschutzausrüstung von thermoplastischen Formmassen mit halogenhaltigen Brandschutzmitteln werden in der Hauptsache 3 verschiedene Arbeitsweisen durchgeführt. Beim Kunststoffhersteller werden die Brandschutzmittel, gegebenenfalls zusammen mit Synergisten, den pulverförmigen Thermoplasten vor der Granulatherstellung zugemischt. Ein solches Granulat kann dann beim Verarbeiter auf herkömmlichen Extrudern oder Spritzgußmaschinen zu brandwidrigen Formteilen verarbeitet werden. Der Verabreiter, der selbst Brandschutzkomponenten dem Kunststoffgranulat zumischen will, verwendet dazu Brandschutzmittelkonzentrate (Masterbatche) in granulierter Form. Eine dritte Möglichkeit, die sowohl für den Hersteller als auch für den Verbraucher von Kunststoffen gegeben ist, besteht darin, die pulverförmigen Brandschutzmittel unter Mitwirkung von Haftvermittlern mit Kunststoffgranulat in einem Mischer zu vermischen.

Bei dem ersten Verfahren hat der Verarbeiter Keine Möglichkeit mehr, das Brandverhalten der angeleiferten Formmassen zu beeinflussen, bzw. Produkte herzustellen, die den unterschiedlichen Brandschutznormen angepaßt werden können. Er ist in diesem Fall gezwungen, das zweite oder dritte Verfahren anzuwenden. Dabei hat es sich gezeigt, daß bei der Arbeitsweise nach dem zweiten Verfahren Schwierigkeiten auftreten, da die Granulate des Kunststoffs und der Brandschutzmittelkonzentrate von unterschiedlichem spezifischem Gewicht sind, so daß, insbesondere bei pneumatischer Förderung der Gemische, sehr leicht Entmischungen auftreten, was inhomogene Produkte mit uneinheitlichen Eigenschaften zur Folge hat.

Nach dem dritten Verfahren lassen sich die hergestellten Produkte sehr leicht der jeweils zu erfüllenden Brandschutznorm durch Zusatz unterschiedlicher Mengen an Brandschutzmittel anpassen. Nachteilig dabei ist, daß dabei nur Brandschutzkomponenten eingesetzt werden können, deren Schmelzpunkte unterhalb der Verarbeitungstemperatur der jeweiligen Thermoplaste liegen. Höher schmelzende Komponenten werden während der Plastifizierung in dem meist kurzen Mischteil der Schnecken nicht ausreichend homogen verteilt, so daß die gespritzten bzw. extrudierten Kunststoffteile inhomogene Stellen (Stippen oder Schlieren) mit wesentlich veränderten physikalischen Eigenschaften zeigen. So ist bei solchen Formteilen die Zugfestigkeit, die Reißfestigkeit und die Reißdehnung vielfach bis zu 35% und die Schlag- bzw. Kerbschlagzähigkeit bis zu 60% vermindert. Auch durch sehr feinteiliges Aufmahlen der Brandschutzkomponenten läßt sich diese Schwierigkeit meist nicht beseitigen.

Damit war die Aufgabe gegeben, Brandschutzkomponenten zu finden, die in Pulverform auf die Oberfläche der Kunststoffgranalien aufgebracht werden können und trotzdem bei der Verarbeitung dieser Granalien völlig homogene Formteile ergeben.

Gegenstand der vorliegenden Erfindung sind Brandschutzkomponenten für thermoplastische Kunststoffe in Form eines Gemisches aus zwei organischen und bei Verarbeitungstemperaturen thermoplastischer Kunststoffe thermisch stabilen Bromverbindungen, von dened eine bei einer Temperatur von über 250°C schmilzt, gegebenenfalls zusammen mit Antimontrioxid, die pulverförmigen oder granulierten Kunststoffmassen zugesetzt werden. Diese Brandschutzkomponenten sind dadurch gekennzeichnet, daß das Gemisch aus Bromverbindungen besteht, von denen die niedrig schmelzende im Temperaturbereich von 80 bis 200°C schmilzt und bei den Verarbeitungstemperaturen für thermoplastische Kunststoffe als Lösungsvermittler für die zweite höher schmelzende Bromverbindung wirkt, die im Temperaturbereich von 280 bis 400°C schmilzt, wobei das Gemisch 60 bis 30 Gew-% an niedriger und 40 bis 70 Gew-% an höher schmelzenden Bromverbindungen enthält.

Es war überraschend, festzustellen, daß bestimmte niedrig schmelzende Brandschutzkomponenten als Lösungsvermittler für höherschmelzende Brandschutzkomponenten dienen. Dies umso mehr, als bei den in etwa den gleichen Bereichen schmelzenden und darüberhinaus auch noch chemisch nahe verwanten Komponenten der Brandschutzmischung nach US—A 4 067 930 ein derartiger Effekt nicht auftritt.

Mit diesen Brandschutzkomponenten lassen sich sowohl thermoplastische Homopolymerisate als auch Copolymerisate brandgeschützt ausrüsten. Die niedrig schmelzende Komponente in der Mischung wirkt dabei als Lösungsvermittler. Bei der Verarbeitungstemperatur des Kunststoffs schmilzt diese Komponente und bildet mit der höher schmelzenden, üblicherweise in fester Form verbleibenden Komponente eine Schmelze oder pastöse Masse, die sich leicht homogen in dem geschmolzenen thermoplastischen Kunststoff verteilt, so daß ein völlig gleichförmiges Formteil entsteht.

Als hoch, d.h. im Bereich von 280 bis 400°C, schmelzende Bromverbindungen können monomere, oligomere oder polymere Verbindungen eingesetzt werden. Monomere Verbindungen sind beispielsweise Polytribromstyrol, Polydibromidiphenyläther oder bromierte Terphenyle mit mindestens 11 Bromatomen im Molekül. Oligomere und polymere Verbindungen sindbeispielsweise Polytribromstyrol, Polydibromstyrol, Polytetrabromxylylenterephthalat, Polypentabrombenzylacrylat, Polypentabromphenyläthylacrylat oder bromiertes Polyphenylenoxid.

Als niedrig, d.h. im Bereich von 80 bis 200°C, schmelzende Bromverbindungen lassen sich beispielsweise Tetrabrombisphenol A, Tetrabrombisphenol A-dibrompropyläther, Pentabrombenzylacrylat oder Pentabromphenyläthylbromid verwenden.

Weiterhin lassen sich in dem erindungsgemäßen Gemisch anstelle jeweils einer höher und einer niedriger schemlzenden Bromverbindung auch Mischungen von zwei oder mehreren der genannten höher bzw. niedriger schmelzenden Verbindungen einsetzen.

Dabei beträgt in dem Gemischen der Anteil der höher schmelzenden Bromverbindung bzw. Bromverbindungen 40 bis 70 Gew-% under der Anteil der niedriger schmelzenden Bromverbindung bzw. Bromverbindungen 60 bis 30 Gew-%.

Besonders bewährt haben sich die Gemische aus Decabromdiphenyläther und Tetrabrombisphenol A zur Brandschutzausrüstung von Polystyrol und ABS-Polymerisat, aus Polytetrabromxylylenterephthalat und Tetrabombisphenol A zur Brandschutzausrüstung von glasfaserverstärktem Polybutylenglykolterephthalat und aus Polytribromstyrol und Tetrabrombisphenol A-dibrompropyläther zur Brandschutzausrüstung von Polyolefinen.

Beispiel 1 (Vergleich)

In einem Pflugbettmischer werden 10 kg mit Polybutadien modifiziertes, schlagzähes Polystyrol (HIPS) in Granulatform eingefüllt. Unter Mischen werden 0,1 kg einer Mischung aus 70 Gewichtsteilen Pentabromdiphenyläther und 30 Gewichtsteilen Tribomkresylphosphat als Haftvermittler und anschließend 0,85 kg Decabromdiphenyläther und 0,4 kg Antimontrioxid zugegeben. Nach etwa 5 Minuten Mischzeit sind die pulverförmigen Mittel fest auf den Oberflächen der Granalien fixiert, so daß die Mischung praktisch staubfrei ist.

Beispiel 2 (erfindungsgemäß)

Entsprechend Beispiel 1 werden auf 10 kg HIPS 0,1 kg des Haftvermittlers, danach eine Mischung aus 0,7 kg Decabromdiphenyläther und 0,3 kg Tetrabrombisphenol A und anschließend 0,3 kg Antimontrioxid aufgebracht.

Beispiel 3 (Vergleich)

In einem Fluidmischer werden entsprechend Beispiel 1 auf 10 kg ABS-Granulat 0,1 kg des Haftvermittlers und danach 1,5 kg Decabromdiphenyl und 0,5 kg Antimontrioxid aufgebracht.

Beispiel 4 (erfindungsgemäß).

Entsprechend Beispiel 3 werden auf 10 kg ABS-Granulat 0,1 kg des Haftvermittlers, danach eine Mischung aus 0,85 kg Decabromdiphenyl und 0,85 kg Tetrabrombisphenol A und anschließend 0,5 kg Antimontrioxid aufgebracht.

Beispiel 5 (Vergleich)

Entsprechend Beispiel 1 werden auf 10 kg Polybutylenglykolterephthalat (PBTP) mit 30% Glasfaser 0,1 kg des Haftvermittlers und danach 1,0 kg Polytetrabromxylylenterephthalat und 0,4 kg Antimontrioxid aufgebracht.

Beispiel 6 (erfindungsgemäß)

Entsprechend Beispiel 5 werden auf 10 kg PBTP mit 30% Glasfaser 0,1 kg des Haftvermittlers, danach eine Mischung aus 0,6 kg Polytetrabromxylylenterephthalat und 0,4 kg Tetrabrombisphenol A und anschließend 0,4 kg Antimontrioxid aufgebracht.

Beispiel 7 (Vergleich)

Entsprechend Beispiel 3 Werden auf 10 kg Niederdruckpolyäthylen (HDPE). 0,1 kg des Haftvermittlers und danach 0,8 kg Polytribromstyrol und 0,35 kg Antimontrioxid aufgebracht.

Beispiel 8 (erfindungsgemäß)

Entsprechend Beispiel 7 werden auf 10 kg HDPE 0,1 kg des Haftvermittlers, danach eine Mischung aus 0,5 kg Polytribromstyrol und 0,5 kg Tetrabrombisphenol A-dibrompropyläther und anschließend 0,35 kg Antimontrioxid aufgebracht.

Die Mischungen der Beispiele 1 bis 4, 7 und 8 werden auf einer Spritzgußmaschine zu Normspritzkörpern verspritzt. Die Mischungen der Beispiele 5 und 6 werden über einen Einschneckenextruder mit Breitschlitzdüse zu Platten verarbeitet, aus denen Normprüfstäbe geschnitten werden. Mit den Proben werden die Prüfungen der nachfolgenden Tabelle durchgeführt.

Zum Brandtest UL 94 der Underwriter's Laboratories, USA, folgende Angaben:

Eine Probe von 127 mm Länge und 12,7 mm Breite wird so in eine Haltevorrichtung eingespannt, daß die Längsachse der Probe senkrecht verläuft und ihre Vorderkante sich 9,5 mm über dem Brennerrohr eines Bunsenbrenners befindet. Der Brenner wird abseits der Probe entzündet, die nichtleuchtende Flamme auf eine Höhe von 19 mm eingestellt und dann der Brenner unter die Mitte der Probenunterkante gestellt. Nach 10 Sekunden wird der Brenner entfernt und Nachbrenn-Dauer und Nachglimmdauer der Probe gemessen. Nach vollständigem Erlöschen wird die Probe ein zweites Mal 10 sekunden beflammt und die zweite Nachbrenn- und Nachglimmdauer bestimmt.

Danach wird die Probe in folgende Klassen eingestuft:

HB=die Probe brennt nach Entfernen der Flamme weiter

V-0=keine Nachbrenndauer von zusammen mehr als 10 Sekunden; keine Nachglimmdauer über 30 Sekunden nach der 2. Beflammung; kein Abtropfen, das untergelegte Watte entzündet

V-1=keine Nachbrenndauer von zusammen mehr als 50 Sekunden; keine Nachglimmdauer über 60 Sekunden nach der 2. Beflammung; kein Abtropfen, das untergelegte Watte entzündet

V-2=keine Nachbrenndauer von zusammen mehr als 50 Sekunden; keine Nachglimmdauer über 60 Sekunden nach der 2. Beflammung; Probe darf brennend abtropfen und untergelegte Watte entzünden.

| | Reißfestigkeit DIN 53 455 N/mm² | Reißdehnung DIN 53 455 m/m | Schlag-zähigkeit DIN 53 453 kJ/m² | Kerbschlag-zähigkeit DIN 53 453 kJ/m² | Brandtest UL 94 3,2 mm | Bemerkungen |
|---|---|---|---|---|---|---|
| HIPS ohne Brandschutz (Vergleich) | 26 | 0,43 | 63 | 8 | HB | |
| HIPS nach Beispiel 1 Decambromdiphenyläther Tribromkresylphosphate (Vergleich) | 24 | 0,25 | 31 | 4,5 | V-2 | gespritzte Teile zeigen Stippen und Schlieren |
| HIPS nach Beispiel 2 Tetrabrombisphenol A 80—200 Decabromdiphenyläther 200—400 (erfindungsgemäß) | 25 | 0,40 | 54 | 7 | V-2 | |
| ABS ohne Brandschutz (Vergleich) | 45 | 0,20 | o.B.⁺⁾ | 15 | HB | |
| ABS nach Beispiel 3 Decabromdiphenyl 200—400 (Vergleich) | 42 | 0,10 | 30 | 6,5 | V-0 | gespritzte Teile zeigen Stippen |
| ABS nach Beispiel 4 Decabromdiphenyl Tetrabrombisphenol A (erfindungsgemäß) | 44 | 0,20 | 60 | 12 | V-0 | |

o.B.=ohne Bruch

| | Reißfestigkeit DIN 53 455 $N/mm^2$ | Reißdehnung DIN 53 455 m/m | Schlag-zähigkeit DIN 53 453 $kJ/m^2$ | Kerbschlag-zähigkeit DIN 53 453 $kJ/m^2$ | Brandtest UL 94 3,2 mm | Bemerkungen |
|---|---|---|---|---|---|---|
| PBTP m. 30% Glasfaser ohne Brandschutz (Vergleich) | 116 | 0.03 | 34 | 10 | HB | |
| PBTP nach Beispiel 5 Polytetrabromxylylen-terephthalat (Vergleich) | 63 | 0,01 | 8 | 2,5 | V-0 | extrudierte Platten zeigen Stippen und Schlieren |
| PBTP nach Beispiel 6 Polytetrabromxylylen-terephthalat Tetrabrombisphenol A (erfindungsgemäß) | 99 | 0,02 | 19 | 5,5 | V-0 | |
| HDPE ohne Brandschutz (Vergleich) | 35 | 8,00 | o.B.+) | 18 | HB | |
| HDPE nach Beispiel 7 Polytribromstyrol (Vergleich) | 28 | 3,00 | 36 | 8,5 | V-2 | gespritzte Teile zeigen Stippen |
| HDPE nach Beispiel 8 Polytribromstyrol Tetrabrombisphenol A-dibrompropyläther (erfindungsgemäß) | 33 | 7,00 | 68 | 14,5 | V-2 | |

o.B.=ohne Bruch

**Patentansprüche**

1. Brandschutzkomponenten für thermoplastische Kunststoffe in Form eines Gemisches aus zwei organischen und bei Verarbeitungstemperaturen thermoplastischer Kunststoffe thermisch stabilen Bromverbindungen, von dene eine bei einer Temperatur von über 250°C schmilzt, gegebenenfalls zusammen mit Antimontrioxid, die pulverförmigen oder granulierten Kunststoffmassen zugesetzt werden, dadurch gekennzeichnet, daß das Gemisch aus Bromverbindungen besteht, von denen die niedrig schmelzende im Temperaturbereich von 80 bis 200°C schmilzt und bei den Verarbeitungstemperaturen für thermoplastische Kunststoffe als Lösungsvermittler für die zweite höher schmelzende Bromverbindung wirkt, die im Temperaturbereich von 280 bis 400°C schmilzt, wobei das Gemisch 60 bis 30 Gew-% an niedriger und 40 bis 70 Gew-% an höher schmelzenden Bromverbindungen enthält.

2. Brandschutzkomponenten nach Anspruch 1, dadurch gekennzeichnet, daß die höher und die niedriger schmelzenden Bromverbindungen selbst wieder Mischungen aus zwei oder mehreren Bromverbindungen sind.

**Revendications**

1. Composants de protection contre l'incendie pour matières synthétiques thermoplastiques sous forme d'un mélange de deux composés organiques de brome et thermiquement stables aux températures de transformation des matières synthétiques thermoplastiques, dont l'un fond à une température supérieure à 250°C, le cas échéant en même temps que le trioxide d'antimoine qui est ajouté à la matière plastique sous forme pulvérulente ou granulée, caractérisés en ce que le mélange de composés de brome, dont celui à bas point de fusion fond dans la fourchette de température de 80 à 200°C et qu'aux températures de transformation valables pour les matières synthétiques thermoplastiques, il agit comme solubilisant pour le second composé de brome, à point de fusion plus élevé et qui fond dans l'intervalle de température compris entre 280 et 400°C, ledit mélange est composé de 60 à 30% en poids du composé de brome à bas point de fusion et de 40 à 70% en poids du composé à point de fusion plus élevé.

2. Composants de protection contre l'incendie conformes à la revendication 1, caractérises en ce que les composés de brome à bas et haut point de fusion sont à leur tour des mélanges de deux ou plusieurs combinations de brome.

**Claims**

1. Flame retarding components for thermoplastic materials in the form of a mixture of two organic bromine compounds thermally stable at thermoplastic processing temperatures and of which one melts at a temperature above 250°C, optionally together with antimony trioxide, for addition to powdered or granulated plastic compounds, characterized by the mixture consisting of bromine compounds of which the lower melting one melts in the temperature range from 80° to 200°C and acts at thermoplastic processing temperatures as a solubilizer on the second bromine compound with the higher melting temperature, which melts in the temperature range from 280° to 400°C, the mixture containing 60% to 30% by weight of the lower melting bromine compound and 40% to 70% by weight of the higher melting bromine compound.

2. Flame retarding compounds as in claim 1, characterized by the lower and higher melting bromine compounds being in turn mixtures of two or more bromine compounds.